# EUROPÄISCHE PATENTSCHRIFT

(11) **EP 0 373 495 B1**
(45) Veröffentlichungstag und Bekanntmachung des Hinweises auf die Patenterteilung: **09.06.1993**
(21) Anmeldenummer: 89122507.0
(22) Anmeldetag: 06.12.1989
(51) Int. Cl.: F16H 57/04, F16N 21/00

(54) **Schmiervorrichtung für angetriebene Fahrzeugachsen**
Lubricating device for the driven axles of vehicles
Dispositif de lubrification pour des axes de véhicules entraînés

(30) Priorität: 13.12.1988 DE 3841865; 31.10.1989 DE 3936148
(43) Veröffentlichungstag der Anmeldung: 20.06.1990
(73) Patentinhaber: Iveco Magirus Aktiengesellschaft, D-89017 Ulm (DE)
(72) Erfinder: Wörner, Gerhard, Dipl.-Ing. (FH), D-7900 Ulm-Gögglingen (DE)
(74) Vertreter: TER MEER STEINMEISTER & PARTNER GbR

(56) Entgegenhaltungen:
- BE-A- 564 660
- DE-A- 3 410 977
- DE-A- 3 743 671
- US-A- 2 263 936

## Beschreibung

Die Erfindung betrifft eine Schmiervorrichtung für das Getriebe angetriebener Fahrzeugachsen, insbesondere für ein Längsdifferential einer angetriebenen Tandemachse.

Aus DE-A-37 43 671 ist ein Längsdifferential für die Tandemachse eines Fahrzeugs bekannt. Die Schmierung des Längsdifferentials erfolgt mit Spritz- oder Tropföl über einen separaten Ölsumpf. Hierbei ist ein feststehendes Gehäuse mit einem eigenen, hochgelegten Ölsumpf vorgesehen, in den das offene, rotierende Differentialgetriebe eintaucht. Im Betrieb ergeben sich hohe Plantschverluste, ein geringer Leistungsdurchsatz sowie eine starke Erwärmung, die letztlich mit einem hohen Verschleiß einhergehen. Insbesondere werden die Schmierstellen im nahen Bereich des Rotationszentrums nicht zufriedenstellend mit Öl versorgt.

Aufgabe der Erfindung ist die Beseitigung der vorgenannten Nachteile des Stands der Technik insbesondere durch Schaffung einer Schmiervorrichtung der eingangs genannten Art, die einfach aufgebaut ist und zuverlässig mit Hilfe einfacher Mittel selbst kritische, radial innengelegene Schmierstellen des Getriebes mit Schmiermittel versorgt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 6.

Wesen der Erfindung ist, daß aufgefangenes Schmiermittel, insbesondere Schmieröl, ohne besonderen technischen Aufwand auf ein Rotationsniveau nahe dem Drehzentrum gebracht und von dort aus im kontinuierlichen Durchfluß allen wichtigen Schmierstellen ausreichend zugeführt wird. Das Schmiermittel wird in bekannter Weise gesammelt und einem Ringraum zugeführt. Um eine rotierende Hohlwelle (z.B. Kegelrad) ist ein gehäusefester Ringraum angeordnet, der in tangentialer Richtung sichelförmige Endabschnitte aufweist. In diesen Endabschnitten findet durch eine geeignete Stauung des über Adhäsionskräfte in Rotation versetzten Schmiermittelrings eine Druckerhöhung statt. Durch diesen Druck wird Schmiermittel über radiale Durchgangsöffnungen an der Hohlwelle entgegen der Zentrifugalkraft nach innen gefördert. Der Innenraum der Hohlwelle hat räumliche Verbindung zu den Lagerstellen und den Verzahnungen der Ausgleichsräder, so daß das in die Hohlwelle eingebrachte Schmiermittel zu den Schmierstellen weitergefördert wird. Um eine vollständige Versorgung aller Schmierstellen zu gewährleisten, ist der die Differentialkegelräder umgebende Innenraum gegenüber dem übrigen Getriebe- bzw. Gehäuseraum abgedichtet; auch die Durchmesser der radialen Gleitlagerstellen sind entsprechend der Durchflußrichtung aufeinander abgestimmt.

Es ergibt sich mithin eine sichere und kontinuierliche Schmierung insbesondere eines Längsdifferentials eines Fahrzeugs in allen Betriebszuständen auf einfache Art, ohne zusätzliche mechanische oder hydraulische Förderelemente zu verwenden.

Zwar ist aus US-A-2 263 936 eine Schmiervorrichtung für angetriebene Achsen mit einer Druckkeil-Schmiermittelförderung bekannt. Die Druckkeil-Schmiermittelförderung erfolgt jedoch durch Axialbohrungen, verbleibt auf gleichem Rotationsniveau und reicht nur bedingt aus, um auch die nahe dem Rotationszentrum befindlichen Schmierstellen mit durchfließendem Schmiermittel zu versorgen.

Die Erfindung wird nachfolgend anhand eines Ausführungsbeispiels unter Bezugnahme auf die beigefügte schematische Zeichnung näher erläutert; es zeigen:
- Fig. 1: ein Längsdifferentialgetriebe einer angetriebenen Tandemachse im Bereich der ersten Achse in einem Axialschnitt,

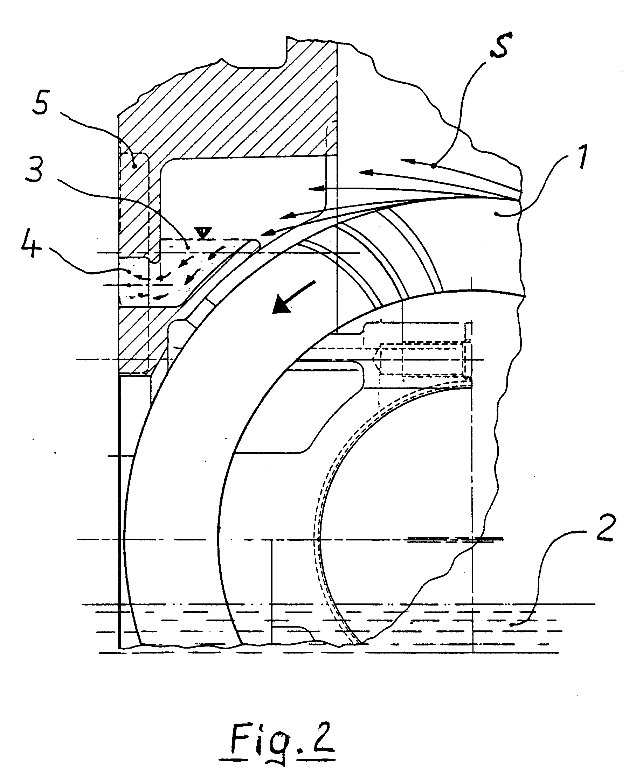

- Fig. 2: das Tellerrad der Fig. 1 im Ölförderbereich in größerer Einzelheit, und

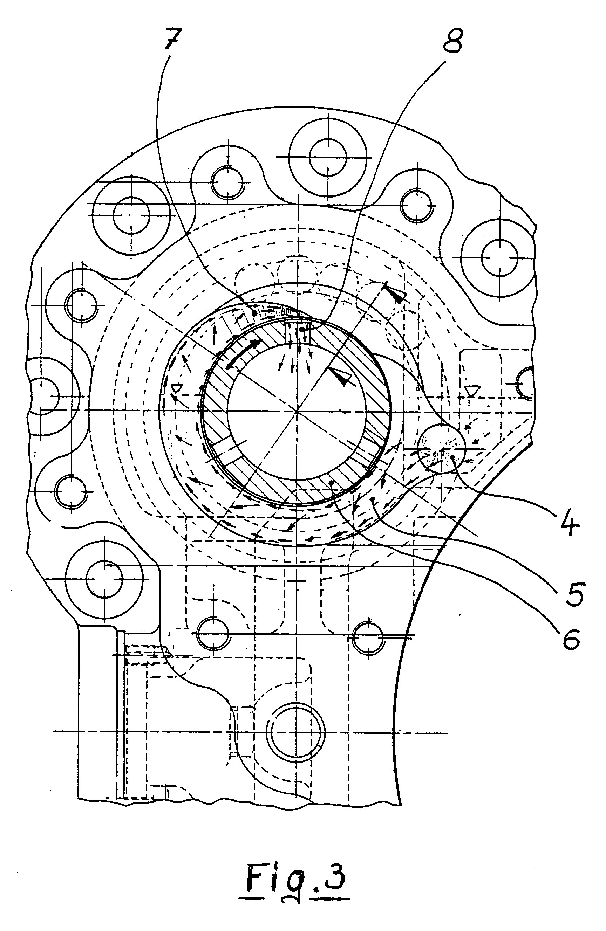

- Fig. 3: einen Querschnitt durch das Längsdifferential im Bereich des sichelförmigen Schmiermittel-Ringraums.

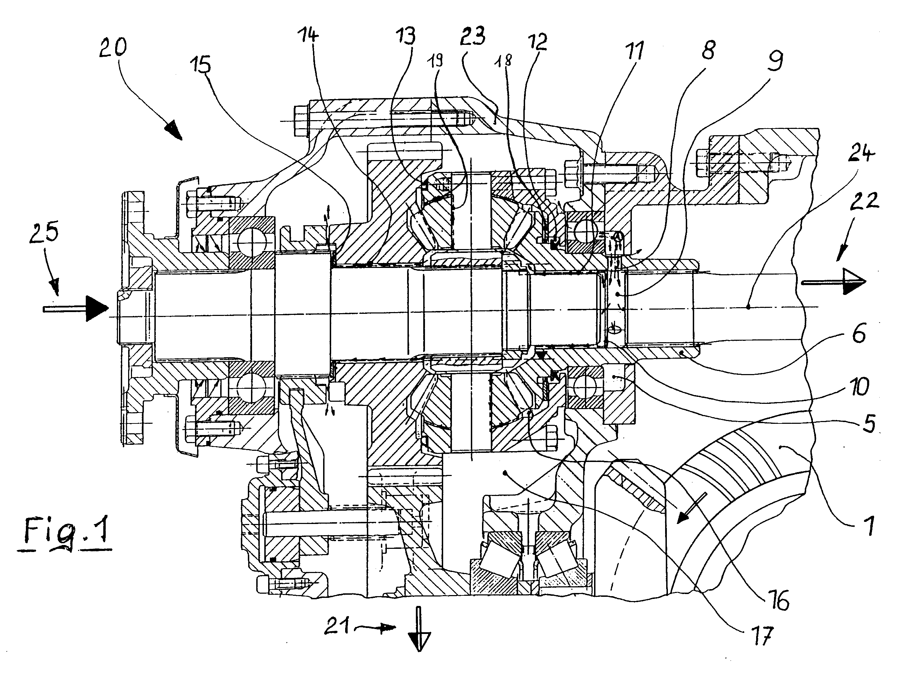

Gemäß Fig. 1 ist ein Ausschnitt eines Längsdifferentialgetriebes (20) einer Tandemachse eines Fahrzeugs dargestellt. Ein derartiges Getriebe hat die Aufgabe, das vom Motor bzw. Getriebe (25) kommende Drehmoment auf zwei angetriebene Fahrzeugachsen aufzuteilen, beispielsweise auf die erste Hinterachse (21) und die zweite Hinterachse (22) eines Fahrzeugs.

Von einem Tellerrad (1), welches in einen Schmiermittelsumpf (2) eintaucht, wird Schmiermittel bzw. Schmieröl aufgenommen und in bekannter Weise in einen Schmiermittel-Sammelraum (3) geschleudert. Das gesammelte Schmiermittel (S) strömt über einen Kanal (4) in einen sichelförmigen Schmiermittel-Ringraum (5). Das Längsdifferentialgetriebe (20) besitzt ein Getriebegehäuse (23) und eine in Längsrichtung des Fahrzeugs angeordnete zentrale Hohlwelle (6), die im Betrieb um das Drehzentrum (24) drehbar ist. Mit der Hohlwelle (6), die gleichzeitig eine Kegelverzahnung trägt, wird das im sichelförmigen Schmiermittel-Ringraum (5) befindliche Schmiermittel im Betrieb in Rotation versetzt. Durch die sichelförmige Verjüngung des Ringraums (5) entsteht ein Druckkeil (7), der über die in der Hohlwelle (6) angeordneten, auf dem Umfang gleichmäßig verteilten drei radialen Durchgangsöffnungen (8) Schmiermittel in einen zylindrischen Zwischenraum (9) preßt.

Um ein Zurückfließen des Schmiermittels durch Fliehkraft zu verhindern, ist im Innern der Hohlwelle (6) ein im Radialquerschnitt L-förmiger Ring (10) angeordnet, so daß das von diesem Ring (10) zurückgehaltene Schmiermittel mit Hilfe der Fliehkraft durch eine erste radiale Gleitlagerstelle (11) gepreßt und von dort aus in den eigentlichen Innenraum (16) des Längsdifferentials (20) gelangt. Der Innenraum (16) ist gegenüber dem umgebenden Gehäuseraum (17) des Getriebegehäuses (23) durch Dichtungen (12, 13) abgedichtet, so daß sich der Innenraum (16) bis zu dem durch den Durchmesser einer zweiten radialen Gleitlagerstelle (14) bestimmten Niveau mit Schmiermittel füllen kann.

Damit sind praktisch alle Verzahnungen und Lagerstellen (11, 14, 15, 18, 19) des Längsdifferentialgetriebes (20) ausreichend mit Schmiermittel versorgt.

Mit dem aus dem Innenraum (16) überströmenden Schmiermittel (S) wird die zweite radiale Gleitlagerstelle (14) und das sich anschließende axiale Gleitlager (15) durchströmt, bis es schließlich in den Schmiermittelsumpf (2) des Gehäuseraums (17) gelangt und von dort wieder erneut über das Tellerrad (1) dem vorstehend beschriebenen Kreislauf zugeführt wird.

## Patentansprüche

1. Schmiervorrichtung für angetriebene Fahrzeugachsen mit einem Längs differential (20), mit einer von einem Motor angetriebenen Eingangswelle, einem auf der Eingangswelle drehbar angeordneten Zahnrad, das über ein weiteres zweites Differentialgetriebe die erste Achse antreibt, einer koaxial zur Eingangswelle angeordneten Ausgangswelle zum Antrieb der zweiten Achse, einer drehfest mit der Ausgangswelle verbundenen Hohlwelle (6), in der das getriebeseitige Ende der Eingangswelle drehbar gelagert ist, einem axial zwischen Ein- und Ausgangswelle liegenden Zwischenraum (9), einem starr auf der Eingangswelle angebrachten Ritzelträger mit Ritzeln, die einerseits die Verbindung zur Hohlwelle (6) und andererseits zum genannten Zahnrad herstellen, und mit einem Schmiermittelsumpf (2), in den (nur) das zweite Differentialgetriebe eintaucht,
gekennzeichnet durch
- einen Schmiermittelsammelraum (3), der über dem Schmier mittelsumpf liegt und das durch das zweite Differentialgetriebe hochgeschleuderte Schmiermittel auffängt,
- einen im Querschnitt sichelförmigen Schmiermittelringraum (5), dessen kreisförmiger Innendurchmesser durch die Hohlwelle (6) gebildet und der einerseits mit dem Schmiermittelsammelraum (3) und andererseits radial innen mit dem Zwischenraum (9) über radiale Durchgangsöffnungen (8) verbunden ist, wobei
- die Drehung der Hohlwelle (6) durch Adhäsionskräfte den Schmiermittelring im Ringraum (5) in Rotation versetzt und die dadurch entstehende Stauung am Endabschnitt des Ringraums (5) die Ausbildung eines Druckkeils (7) bewirkt, der das Schmiermittel in den Zwischenraum (9) preßt, und von dort im kontinuierlichen Durchfluß praktisch allen Schmiermittelstellen (11, 14, 15, 18, 19) des Getriebes (20) zuführt.

2. Schmiervorrichtung nach Anspruch 1,
dadurch gekennzeichnet,
daß drei auf dem Umfang der Hohlwelle (6) im wesentlichen gleich beabstandete radiale Durchgangsöffnungen (8) vorgesehen sind.

3. Schmiervorrichtung nach Anspruch 1 oder 2,
dadurch gekennzeichnet,
daß der Schmiermittel-Ringraum (5) eingangsseitig über einen Kanal (4) mit dem Schmiermittel-Sammelraum (3) verbunden ist, der über dem Niveau des Schmiermittelsumpfes (2) und auf einem Höhenniveau des Schmiermittel-Ringraums (5) liegt und in welchen über ein im Schmiermittelsumpf (2) eintauchendes Tellerrad (1) Schmiermittel (S) eingeschleudert wird.

4. Schmiervorrichtung nach einem der Ansprüche 1 bis 3,
dadurch gekennzeichnet,
daß der zylindrische Zwischenraum (9) der Hohlwelle (6) im Bereich der radialen Durchgangsöffnungen (8) durch einen im Radialquerschnitt L-förmigen Ring (10) unterteilt ist, welcher in Axialrichtung zwischen den radialen Durchgangsöffnungen (8) und einer ersten radialen Gleitlagerstelle (11) des Differentialgetriebes (20) liegt.

5. Schmiervorrichtung nach Anspruch 4,
dadurch gekennzeichnet,
daß eine zweite radiale Gleitlagerstelle (14) des Differentialgetriebes (20) mit einem Durchmesser vorgesehen ist, der größer als der Durchmesser der ersten radialen Gleitlagerstelle (11) ist, wobei der Innenraum (16) des Differentialgetriebes zwischen erster und zweiter Gleitlagerstelle (11, 14) durch Dichtungen (12, 13) abgedichtet ist.

6. Schmiervorrichtung nach Anspruch 5,
dadurch gekennzeichnet,
daß die zweite radiale Gleitlagerstelle (14) mit einer radial äußeren axialen Gleitlagerstelle (15) verbunden ist, welche mit dem Gehäuseraum (17) des Getriebegehäuses (23) verbunden ist.

## Claims

1. A lubricating device for driven vehicle axles with a longitudinal differential (20), with a primary shaft driven by a motor, with a toothed wheel rotatably arranged on the primary shaft, which toothed wheel drives the first axle via a further second differential gear, with an output shaft, arranged coaxially with the primary shaft, to drive the second axle, with a hollow shaft (6) which is connected to the output shaft so as to be secure with respect to rotation, in which the end of the primary shaft on the gear side is rotatably mounted, with an intermediate space (9) lying axially between the primary and output shafts, with a pinion carrier arranged rigidly on the primary shaft, with pinions which on the one hand produce the connection to the hollow shaft (6) and on the other hand to the said toothed wheel, and with a lubricant sump (2), into which (only) the second differential gear is immersed,
characterised by
- a lubricant collecting chamber (3), which lies over the lubricant sump and which collects the lubricant which is thrown up by the second differential gear,
- an annular lubricant space (5), which is crescent-shaped in cross-section, the circular internal diameter of which is formed by the hollow shaft (6) and which is in communication on the one hand with the lubricant collecting chamber (3) and on the other hand, radially inwardly, with the intermediate space (9) via radial through openings (8), in which
- the rotation of the hollow shaft (6) sets the lubricant ring in the annular space (5) in rotation through adhesion forces and the obstruction thereby arising at the end section of the annular space (5) brings about the formation of a pressure increase (7), which presses the lubricant into the intermediate space (9), and from there in a continuous through flow conveys it to practically all the lubricant sites (11, 14, 15, 18, 19) of the gear (20).

2. A lubricating device according to Claim 1,
characterised in that
three radial through openings (8) are provided, arranged at substantially equidistant spacings around the circumference of the hollow shaft (6).

3. A lubricating device according to claim 1 or 2,
characterised in that
the annular lubricant space (5) is connected on the inlet side via a duct (4) with the lubricant collecting chamber (3), which lies above the level of the lubricant sump (2) and on a level within the vertical extent of the annular lubricant space (5) and into which lubricant (S) is thrown via a bevel wheel (1) which is immersed in the lubricant sump (2).

4. A lubricating device according to any one of Claims 1 to 3,
characterised in that
the cylindrical intermediate space (9) of the hollow shaft (6) in the region of the radial through openings (8) is divided by a ring (10) which is L-shaped in radial cross-section and which lies in axial direction between the radial through openings (8) and a first radial sliding bearing position (11) of the differential gear (20).

5. A lubricating device according to Claim 4,
characterised in that
a second radial sliding bearing position (14) of the differential gear (20) is provided with a diameter which is greater than the diameter of the first radial sliding bearing position (11), in which the interior (16) of the differential gear is sealed by seals (12, 13) between the first and second sliding bearing positions (11, 14).

6. A lubricating device according to Claim 5,
characterised in that
the second radial sliding bearing position (14) is in communication with a radially outer axial sliding bearing position (15), which is in communication with the housing space (17) of the gear housing (23).

## Revendications

1. Dispositif de lubrification pour des axes de véhicules entraînés avec un différentiel longitudinal (20), avec un arbre d'entrée entraîné par un moteur, une roue dentée disposée de façon à pouvoir tourner sur l'arbre d'entrée et qui, par l'intermédiaire d'un autre second mécanisme différentiel entraîne le premier axe, avec un arbre de sortie disposé coaxialement à l'arbre d'entrée pour l'entraînement du second axe, avec un arbre creux (6) solidaire en rotation de l'arbre de sortie, et sur lequel est montée, de façon à pouvoir tourner, l'extrémité côté mécanisme de l'arbre d'entrée, avec une chambre intermédiaire (9) placée axialement entre l'arbre d'entrée et l'arbre de sortie, avec un support de pignon monté rigidement sur l'arbre d'entrée et portant des pignons qui assurent, d'une part, la liaison vers l'arbre creux (6) et, d'autre part, vers la roue dentée précitée, et avec un carter d'agent de lubrification (2) dans lequel plonge (seulement) le second mécanisme différentiel, dispositif de lubrification caractérisé en ce que :
- une chambre collectrice d'agent de lubrification (3) qui est placée au-dessus du carter d'agent de lubrification, capte l'agent de lubrification projeté vers le haut par le second mécanisme différentiel,
- une chambre annulaire d'agent de lubrification (5), de section transversale en forme de croissant, dont le diamètre interne est délimité par l'arbre creux (6), et qui est reliée, d'une part, à la chambre collectrice d'agent de lubrification (3) et d'autre part, radialement vers l'intérieur, à la chambre intermédiaire (9) par des orifices radiaux de passage (8),
- grâce à quoi la rotation de l'arbre creux (6), du fait des forces d'adhérence, met en rotation l'anneau d'agent de lubrification dans la chambre annulaire (5) et l'accumulation en résultant dans le tronçon terminal de la chambre annulaire (5) provoque la formation d'un coin de pression (7), qui presse l'agent de lubrification dans la chambre intermédiaire (9), et à partir de là, l'amène selon un débit continu, pratiquement à tous les emplacements de lubrification (11, 14, 15, 18, 19) du mécanisme (20).

2. Dispositif de lubrification selon la revendication 1, caractérisé en ce qu il est prévu trois orifices radiaux de passage (8) répartis sensiblement uniformément sur la périphérie de l'arbre creux (6).

3. Dispositif de lubrification selon la revendication 1 ou la revendication 2, caractérisé en ce que la chambre annulaire (5) d'agent de lubrification est reliée côté entrée, par l'intermédiaire d'un canal (4) à la chambre collectrice (3) d'agent de lubrification, qui est placée au-dessus du niveau du carter d'agent de lubrification (2) et à un niveau élevé de la chambre annulaire (5) d'agent de lubrification, et dans laquelle l'agent de lubrification (S) est projeté par l'intermédiaire d'une couronne de différentiel (1) plongeant dans le carter d'agent de lubrification (2).

4. Dispositif de lubrification selon une des revendications 1 à 3, caractérisé en ce que la chambre intermédiaire cylindrique (9) de l'arbre creux (6) est subdivisée dans la zone des orifices radiaux de passage (8) par une bague (10) de section transversale radiale en forme de L, et qui est placée en direction axiale entre les orifices de passage radiaux (8) et un premier emplacement radial de palier lisse (11) du mécanisme différentiel (20).

5. Dispositif de lubrification selon la revendication 4, caractérisé en ce qu'un second emplacement radial de palier lisse (14) du mécanisme différentiel (20) est prévu avec un diamètre qui est supérieur au diamètre du premier emplacement radial de palier lisse (11), tandis que la chambre interne (16) du mécanisme différentiel entre le premier et le second emplacement de palier lisse (11, 14) est étanchée par des joints d'étanchéité (12, 13).

6. Dispositif de lubrification selon la revendication 5, caractérisé en ce que le second emplacement radial de palier lisse (14) est relié à un emplacement axial extérieurement radial de palier lisse (15), qui est relié à la chambre de carter (17) du carter (23) du mécanisme.
